# EUROPEAN PATENT SPECIFICATION

(11) **EP 0 949 425 B1**
(45) Date of publication and mention of the grant of the patent: **05.02.2003**
(21) Application number: 98309762.7
(22) Date of filing: 27.11.1998
(51) Int. Cl.: F16B 37/08

(54) **Nut with spring**
Mutter mit Federvorrichtung
Système d'ecrou à ressorts

(30) Priority: 07.04.1998 JP 11268598
(43) Date of publication of application: 13.10.1999
(60) Divisional application: 01120005.2
(73) Proprietor: Taneichi, Kaoru, Atsugi-shi, Kanagawa-ken (JP)
(72) Inventor: Taneichi, Kaoru, Atsugi-shi, Kanagawa-ken (JP)
(74) Representative: Waldren, Robin Michael

(56) References cited:
- EP-A- 0 352 542
- US-A- 3 151 653
- US-A- 4 083 393
- US-A- 4 363 164
- US-A- 5 081 811

## Description

The present invention relates to a nut which is screwed onto a paddle-shaped bolt used where a connection between a beam and another beam in a wooden house is reinforced, or a nut and connector which are used to reinforce a connection between a beam and another beam.

When a connection between a beam and another beam in a wooden house is reinforced using a conventional method, the head of a paddle-shaped bolt is fixed to one beam, a top end portion of the paddle shaped bolt is inserted into a bolt insertion hole which is formed in the other beam, and a nut is fixed and screwed onto the bolt which is passed through a washer.

In the above-mentioned structure, the nut screwed onto the bolt is released and does not function when the timber material dries and contracts.

Additionally, it is troublesome to fit the padded shaped bolt to the nut because the nut is screwed onto the bolt to a predetermined fixed position as it is mounted.

EP 0 352 542 and US 5 081 811 both disclose nuts having the features of the preamble of Claim 1.

In view of the foregoing, it is an object of the present invention to provide a nut and connector which can be pushed onto a threaded portion of a bolt and be positioned in a manner which requires little work to screw onto the bolt.

It is another object of the present invention to provide a nut and connector wherein the nut can be sufficiently screwed onto a bolt if the length of a threaded portion of the bolt is short.

Accordingly a first aspect of the invention provides a nut according to Claim 1. Preferred features of this aspect of the invention are set out in Claims 2 to 9.

According to a second aspect of the invention there is provided a nut in combination with a connector as set out in Claim 10.

The above and further objects and novel features of the invention will more fully appear from the following detailed description when the same is read in connection with the accompanying drawings. It is to be understood that these are for the purpose of illustration only and are not intended to be a definition of the limits of the invention.
Fig. 1 is a front view showing a first comparative connector in use;
Fig. 2 is a front view showing the connector of Figure 1;
Fig. 3 is a top view showing the connector of Figure 1;
Fig. 4 is a front view of the nut from the connector of Figure 1;
Fig. 5 is a top view of the nut of Figure 4;
Fig. 6 is a side view of the nut of Figure 4;
Fig. 7 is a bottom view of the nut of Figure 4;
Fig. 8 is a cross-sectional view taken on line 8-8 of Fig. 4;
Fig. 9 is a cross-sectional view taken on line 9-9 of Fig. 4;
Fig. 10 is a partial cross-sectional view showing the nut of Figure 4 mounted;
Fig. 11 is a partial cross-sectional view showing installation of the nut of Figure 4;
Fig. 12 is a partial cross-sectional view illustrating operation of the connector of Figure 1 when contraction occurs;
Fig. 13 is a front view showing a second comparative connector;
Fig. 14 is a partial cross-sectional front view of the nut from the connector of Figure 13;
Fig. 15 is a top view of the nut of Figure 14;
Fig. 16 is a front view showing a third comparative connector;
Fig. 17 is a partial cross-sectional front view of the nut of from the connector of Figure 16;
Fig. 18 is a top view of the nut of Figure 17;
Fig. 19 is a front view showing a connector according to a first embodiment of the present invention;
Fig. 20 is a front view of a nut of the first embodiment of the present invention;
Fig. 21 is a cross-sectional view taken on line 21-21 of Fig. 20;
Fig. 22 is an exploded view of the nut of the first embodiment of the present invention;
Fig. 23 is a front view showing a fourth comparative connector;
Fig. 24 is a front view of the nut from the fourth comparative connector;
Fig. 25 is a cross-sectional view taken on line 25-25 of Fig. 24;
Fig. 26 is an exploded view showing the way in which the nut of Figure 24 is grappled;
Fig. 27 is a front view showing a fifth comparative connector;
Fig. 28 is a front view of the nut from the connector of Figure 27;
Fig. 29 is a cross-sectional view taken on line 29-29 of Fig. 28;
Fig. 30 is an exploded view showing the way in which the nut of Figure 28 is grappled;
Fig. 31 is a top view showing a first comparative nut;
Fig. 32 is a cross-sectional view taken on line 32-32 of Fig. 31;
Fig. 33 is a cross-sectional view taken on line 33-33 of Fig. 32;
Fig. 34 is an assembly view showing the nut of Figure 31;
Fig. 35 is a top view showing a second embodiment of the present invention;
Fig. 36 is a cross-sectional view taken on line 36-36 of Fig. 35;
Fig. 37 is an assembly view showing the second embodiment of the present invention;
Fig. 38 is a top view showing a third embodiment of the present invention;
Fig. 39 is a cross-sectional view taken on line 39-39 of Fig. 38;
Fig. 40 is a cross-sectional view taken on line 40-40 of Fig. 39;
Fig. 41 is an assembly view showing the third embodiment of the present invention;
Fig. 42 is a top view showing a fourth embodiment of the present invention;
Fig. 43 is a cross-sectional view taken on line 43-43 of Fig. 42;
Fig. 44 is an assembly view showing the fourth embodiment of the present invention;
Fig. 45 is a plan view showing a second comparative nut;
Fig. 46 is a cross-sectional view taken on line 46-46 of Fig. 45;
Fig. 47 is a plan view showing a fifth embodiment of the present invention;
Fig. 48 is a cross-sectional view taken on line 49-49 of Fig. 48; and
Fig. 49 is an assembly view showing the nut according to the fifth embodiment of the present invention.

Preferred embodiments of the present invention will now be described in more detail below referring to the accompanying drawings.

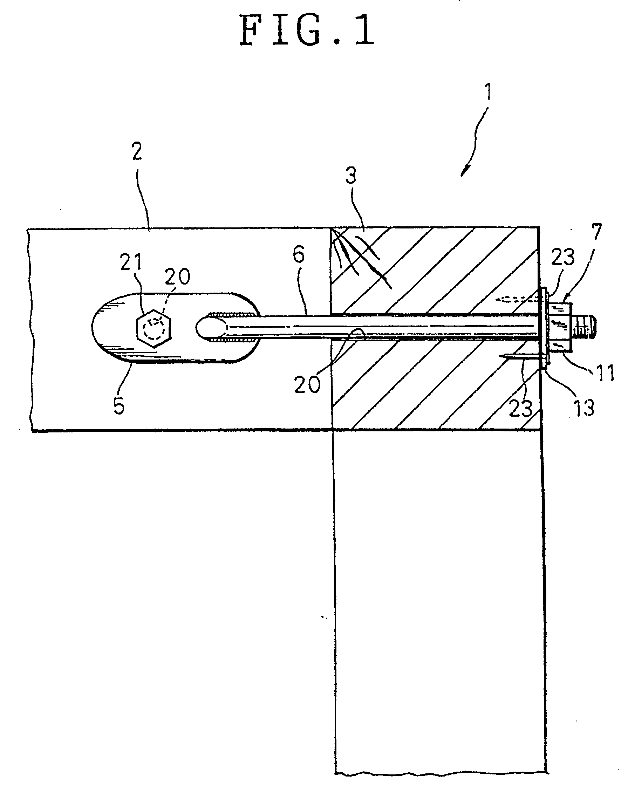

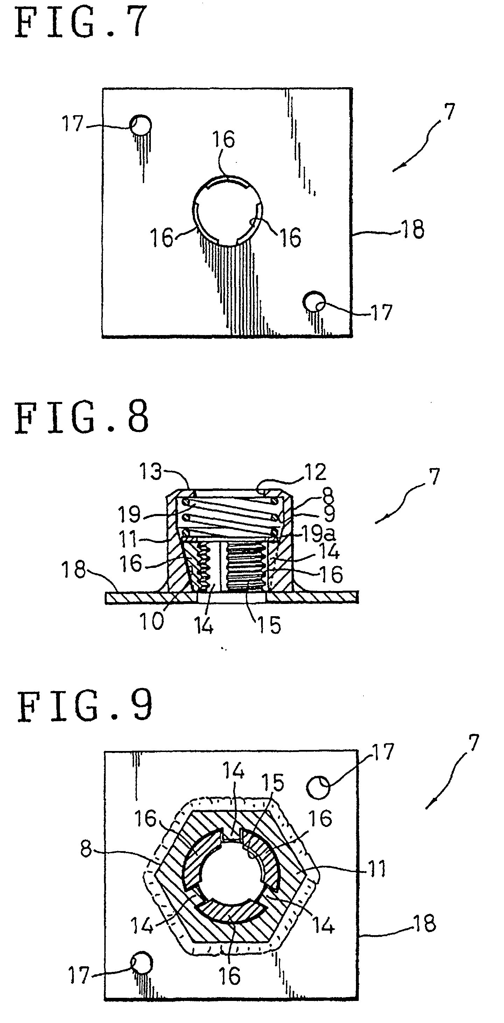

Figs. 1 to 12 illustrate a connector used for reinforcing a connection between a beam 2 and another beam 3 of a wooden house. This connector does not form part of the invention, but is described on a comparative basis in order to facilitate an understanding of embodiments of the invention which will be described below.

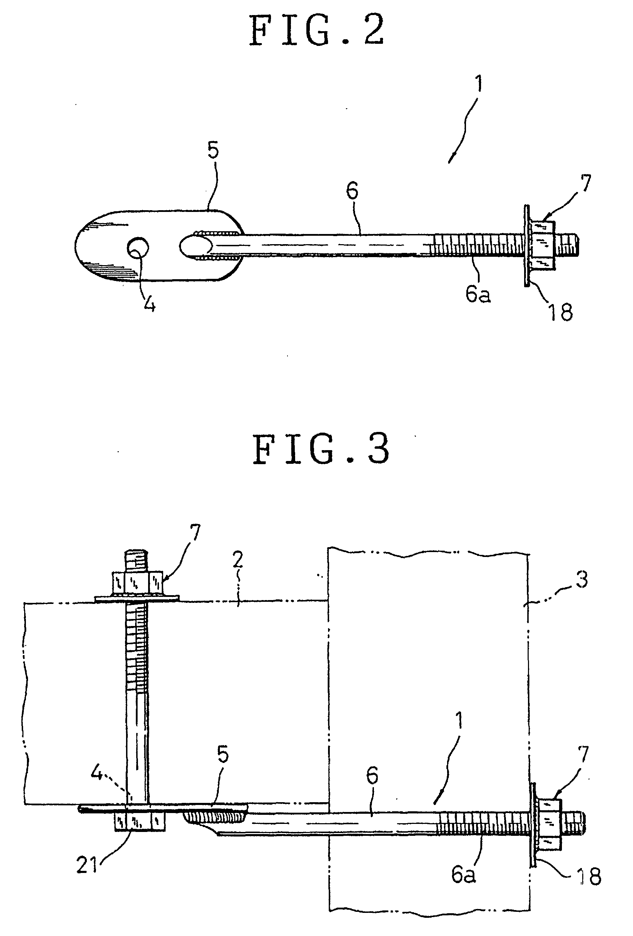

The connector 1, shown in Figs. 2 and 3, comprises a fitting plate 5, a bolt 6, and a nut 7. The fitting plate 5 is formed in the shape of an oval and has an insertion hole 4 for inserting a stopper like a bolt, nail, or the like, in the portion adjacent one end portion thereof. The bolt 6 is fixed to a portion adjacent another end portion of the fitting plate 5. A side portion of the bolt 6 is fixed to the end portion by welding and another end portion of the bolt 6 projects outwardly. The nut 7 can be screwed onto the bolt 6 after it has been pushed onto the bolt 6 to a fixed position.

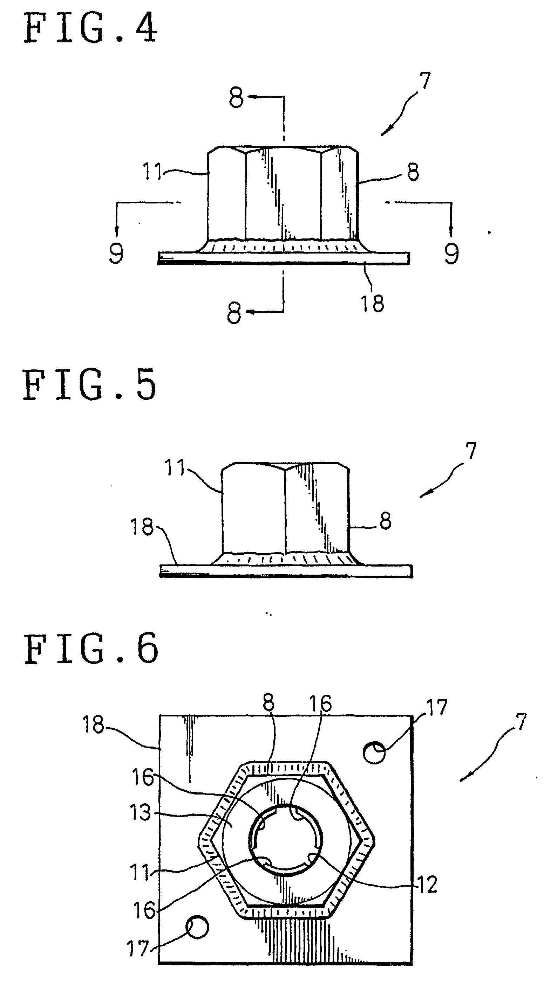

The nut 7 illustrated in Figs. 4 to 9 has an outer wall 8 formed in the shape of a polygon, for example a hexagonal shape, and an inner wall defining a portion of a bore. The nut 7 also comprises a nut body 11 with the bore having a tapered bore portion with an inclined inner wall extending from a narrow bore diameter end of the nut body 11 to a large bore diameter end at the inner wall 9. A stopper 13 is formed at the large diameter end portion of the bore and defines a bolt insertion hole 12. Three guideposts 14, 14, 14 in this embodiment, are formed coaxially at the inclined inner wall of the nut body 11. Three nut segments 16, 16, 16 are movably disposed among the guideposts 14, 14, 14 to move in a coaxial direction and have screw threads 15 on an inner wall thereof. The screw threads 15 screw onto the bolt 6. A fitting piece 18 comprises a flange fixed to the narrow bore diameter end of the nut body 11 by welding and has a plurality of screw insertion holes 17, 17 disposed outwardly of an outer circumferential portion of the nut body 11. The fitting piece 18 is used to fix the nut to a beam or the like. A spring 19 is located within the nut 11 between the stopper 13 and the three nut segments 16, 16, 16 to bias the nut segments 16, 16, 16 towards the narrow bore diameter end of the nut body 11 via a washer 19a as necessary.

As illustrated in Fig. 1, the bolt insertion holes 20, 20 are formed at a portion that is to be reinforced where first and second beams 2 and 3 are joined. After the bolt 6 is inserted into the bolt insertion hole 20 of the second beam 3, the fitting plate 5 is fixed to the first beam 2 by means of a bolt 21 and nut 7.

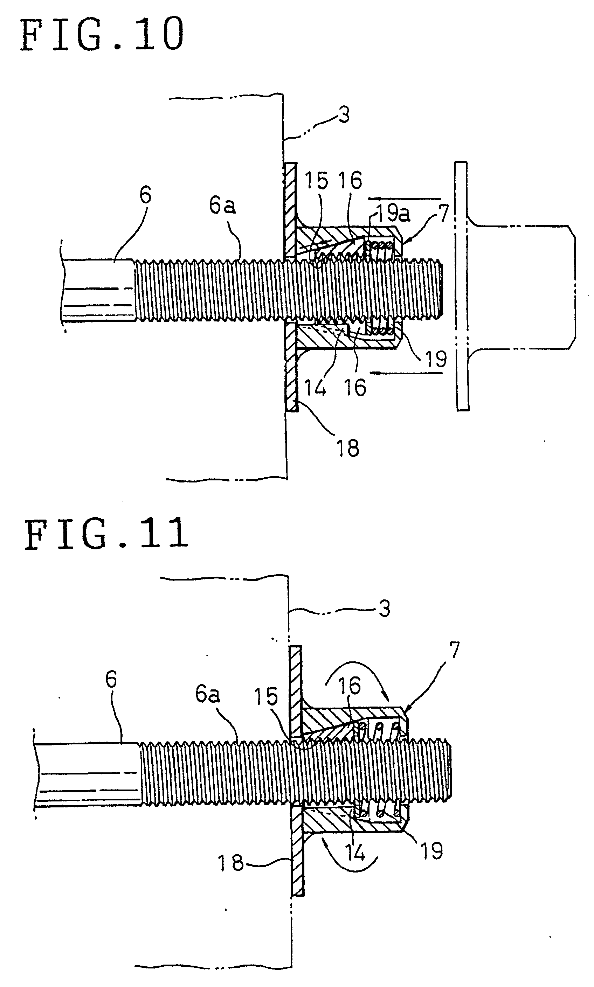

After that, as illustrated in Fig. 10, the nut 7 is pushed onto the bolt 6 to a tightening position such that the fitting piece 18 of the nut 7 is seated. The nut segments 16, 16, 16 then slide towards the large diameter end of the tapered bore portion against the bias of the spring 19 to permit insertion of bolt 6. Then the nut 7 is tightened using a wrench, or the like, as illustrated in Fig. 11. The screw threads 15, 15, 15 of the nut segments 16, 16, 16 are screwed onto the threaded portion 6a of the bolt 6 and the first beam 2 is fixed to the second beam 3. After tightening the nails or screws 23, 23 are driven in insertion holes 17, 17 of the fitting piece 18, and the fitting piece 18 and beam 3 are fixed together. Alternatively the fitting piece 18 may be fixed by pins in the shape of a hook.

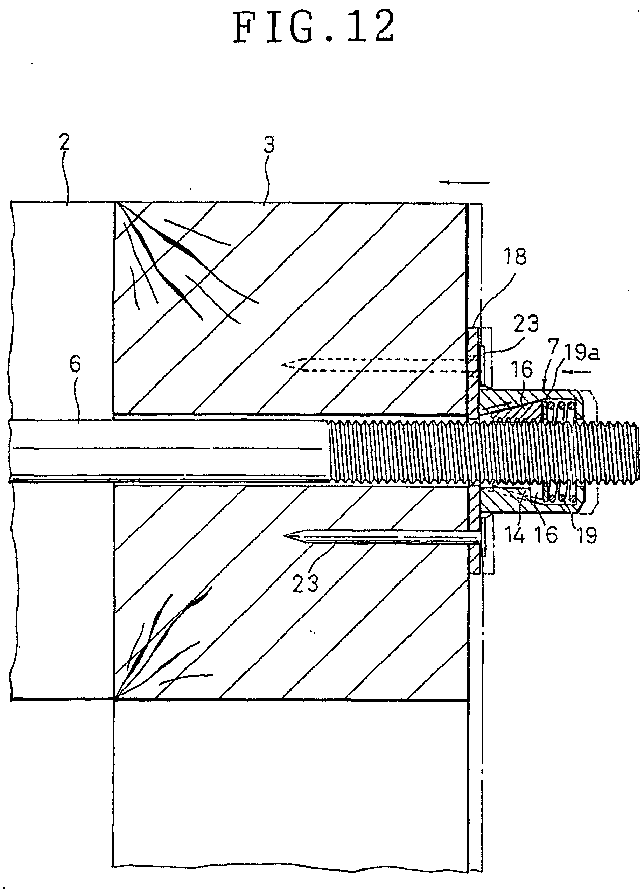

In the above-mentioned connector 1, as illustrated in Fig. 12, the nut body 11 fixed to the second beam 3 by nails or screws 23, 23 slides due to the spring power of the spring 19 and prevents loss of tightening power when the beams 2 and 3 dry and contract.

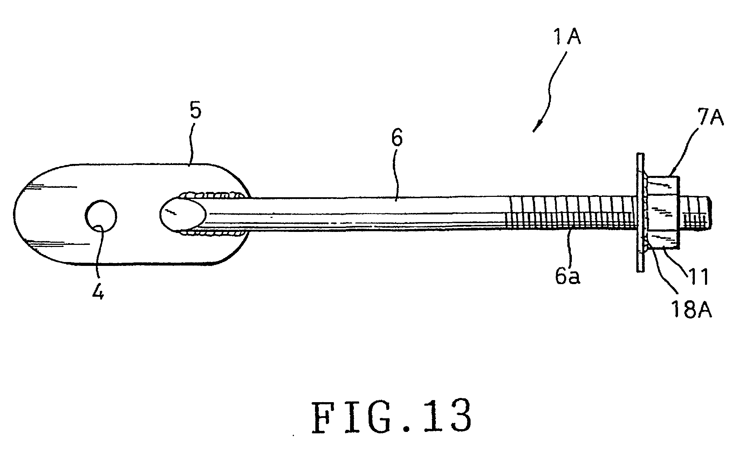

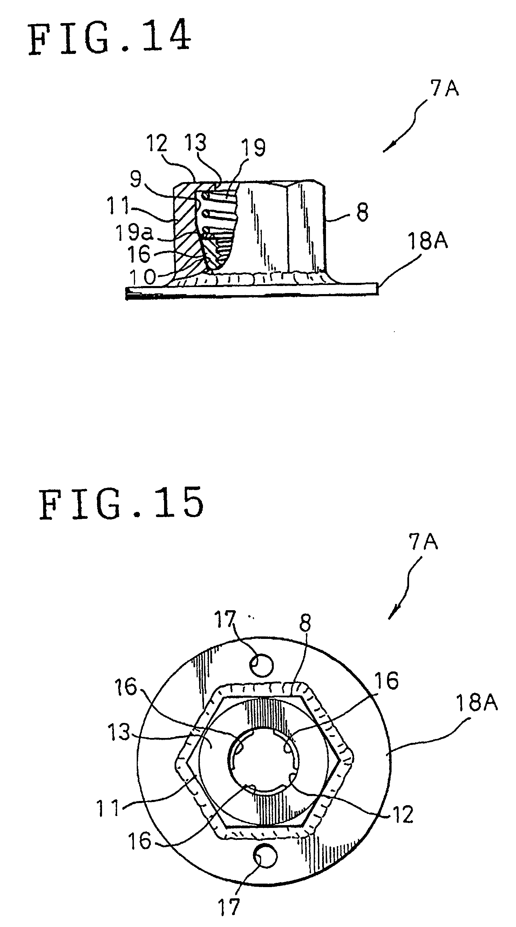

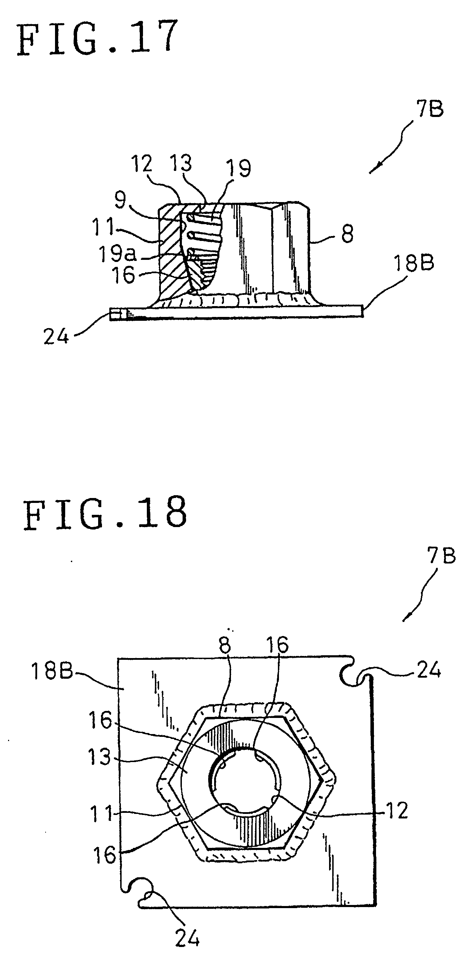

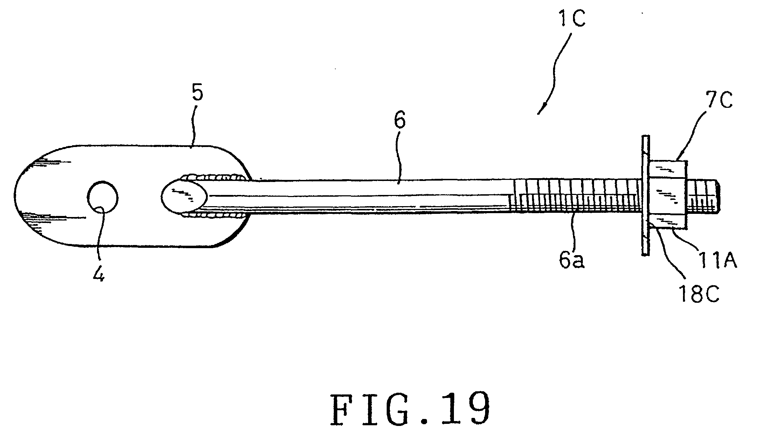

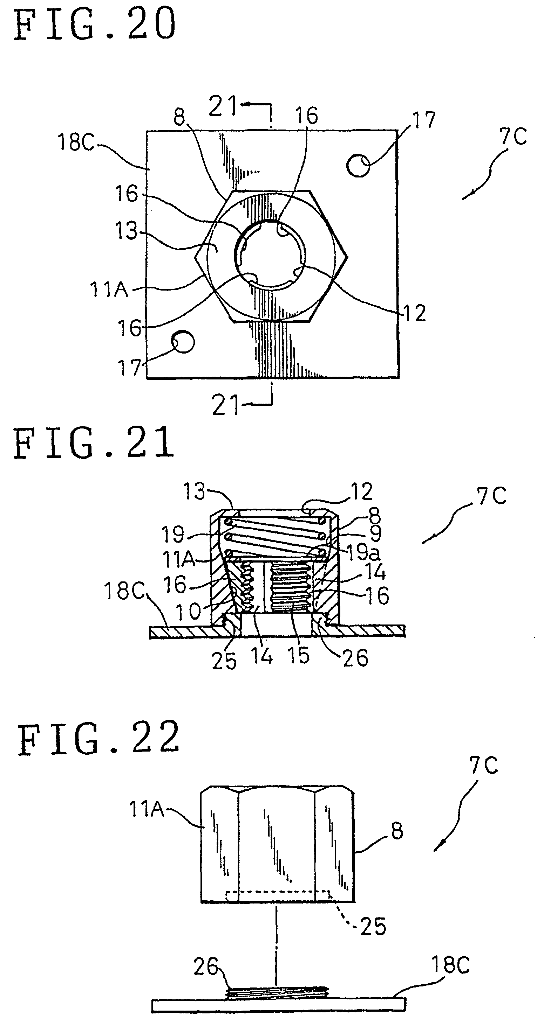

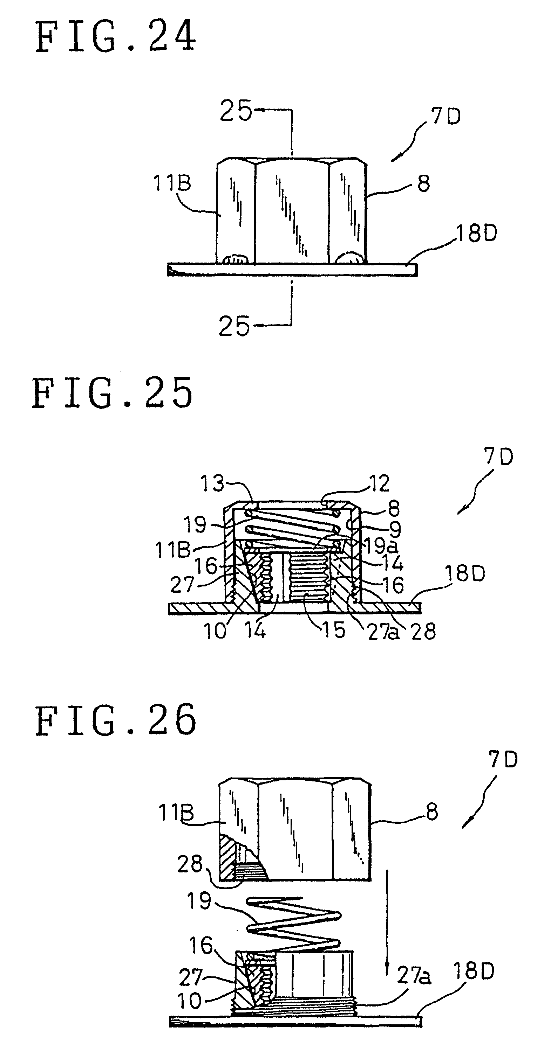

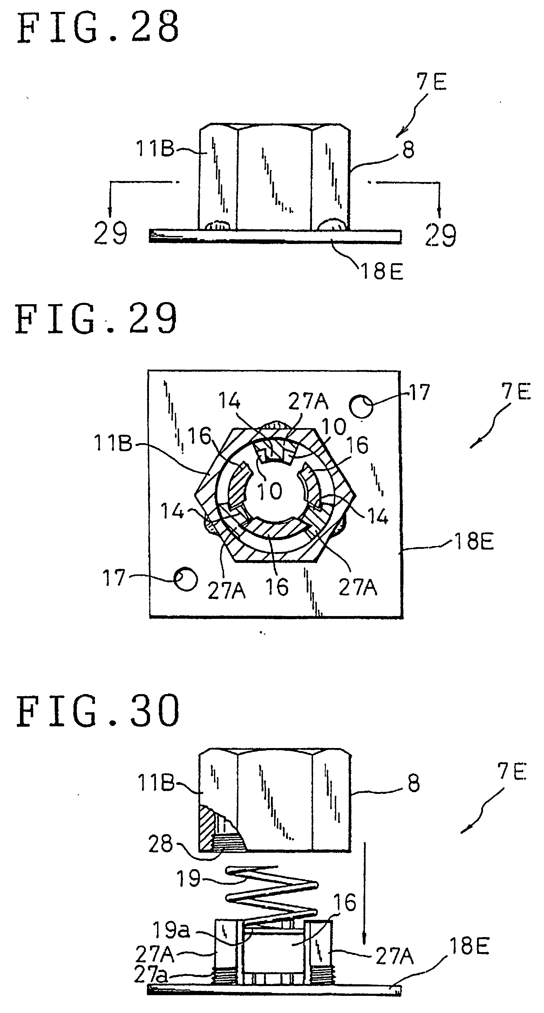

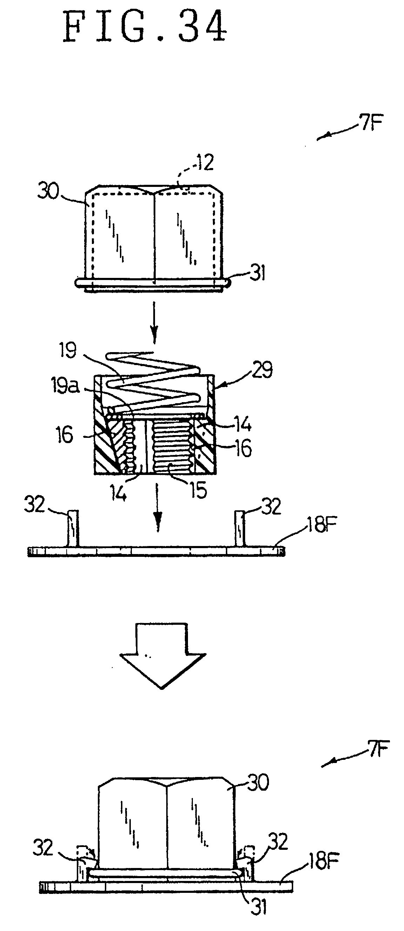

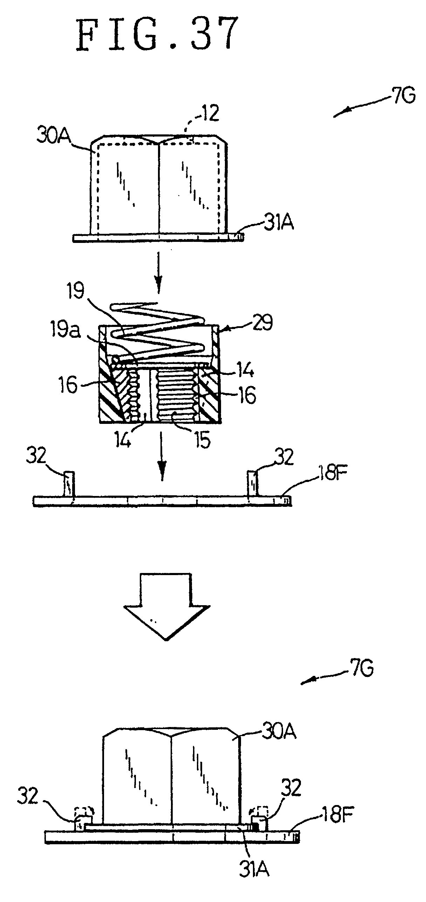

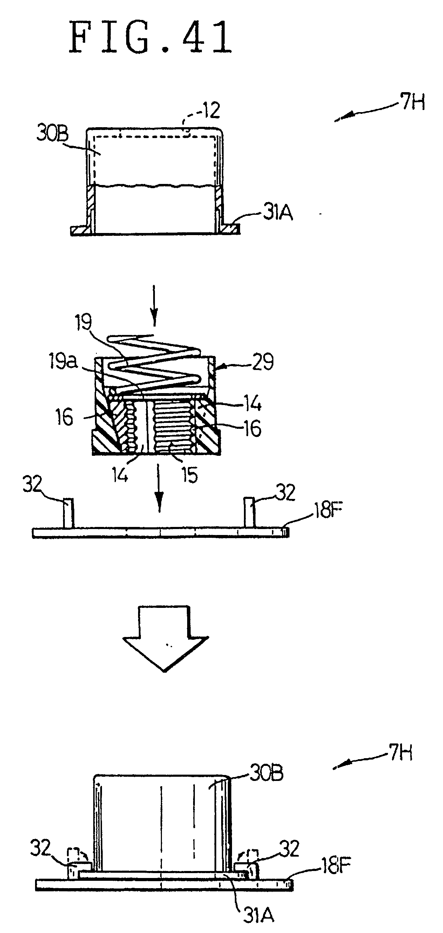

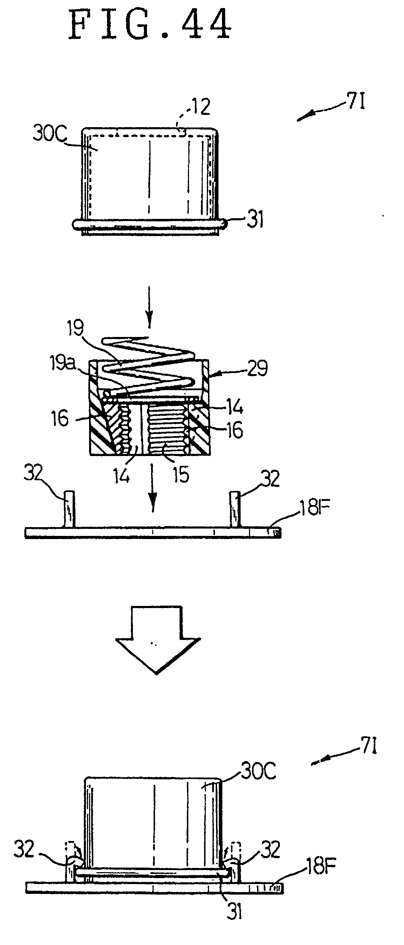

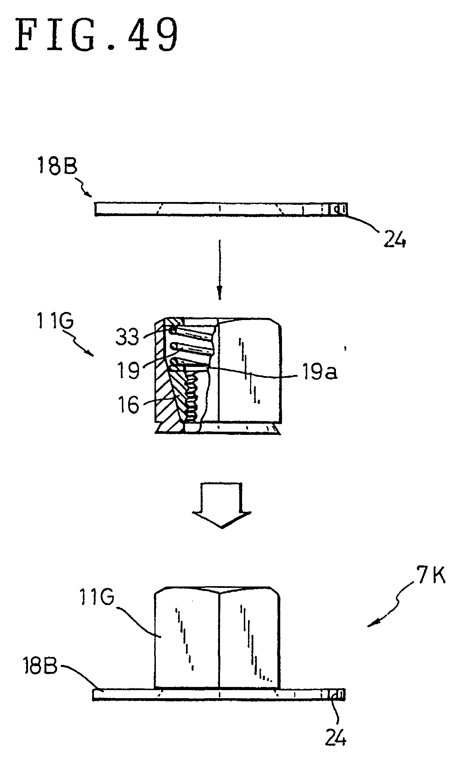

Other connectors and nuts will now be described referring to Figs. 13 to 49. Like components are denoted by like numerals and will be explained in no more detail.

A second comparative connector is shown in Figs. 13 to 15. It does not form part of the invention and is distinguished from the first comparative connector by the fact that the nut 7 is replaced with another similar nut 7A. The nut 7A includes a fitting plate 18A formed in the shape of a disc and fixed to the nut body 11. The second connector 1A with the nut 7A will have similar advantages to the first comparative connector.

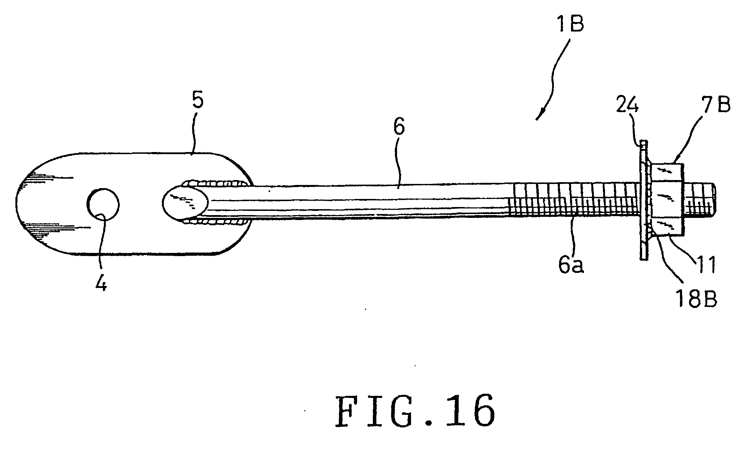

A third comparative connector is shown in Figs. 16 to 18. It does not form part of the invention and is distinguished from the first comparative connector by the fact that the nut 7 is replaced with another similar nut 7B. The nut 7B includes a fitting piece 18B having screw insertion grooves 24, 24 at an outer circumferential portion thereof. Such a fitting plate may be formed by moulding. The third comparative connector 1B will have similar advantages to the first comparative connector.

A first embodiment of the present invention is shown in Figs. 19 to 22. It is distinguished from the first comparative connector by the fact that a thread portion 25 is formed at an inner wall surface at the narrow bore diameter end of the nut body 11A and a threaded tube 26 on a fitting piece 18C screws into the threaded portion 25. A connector 1C with the nut 7C having the fitting piece 18C screwed onto the nut body 11A according to the first embodiment will have similar advantages to the first comparative connector.

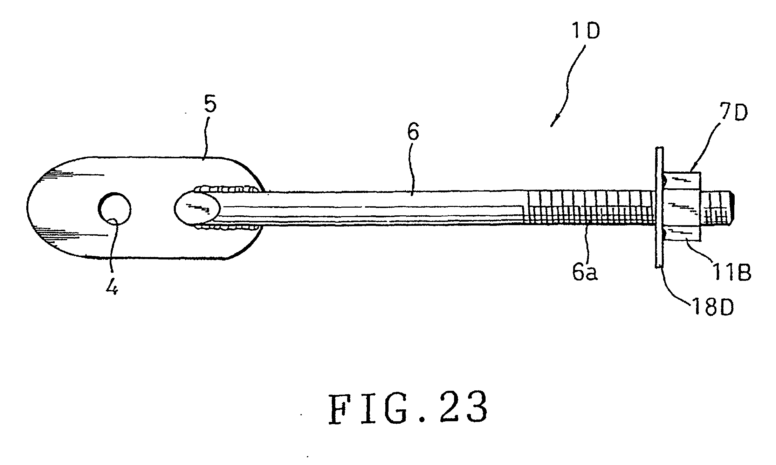

A fourth comparative connector is shown in Figs. 23 to 26. It does not form part of the invention and is distinguished from the first comparative connector by the fact that the nut 7 is replaced with another similar nut 7D and the nut body 11 is replaced with another similar nut body 11B. The nut 7D includes a fitting plate 18D having a tube 26 formed integrally therewith, the tube 26 being provided with a threaded portion on an outer circumferential portion of a lower end thereof which supports the nut segments 16, 16, 16. The nut body 11B has a threaded portion 28 which is formed in an inner wall surface of the end portion thereof and screws onto the threaded portion of the tube 26. A connector 1D with the nut 7D according to the fourth comparative connector will have similar advantages to the first comparative connector and the mounting of the nut 7D can be done easily.

To reinforce the way in which the nut body 11B is screwed onto and fixed to the fitting piece 18D, the threaded portion area between the nut body 11B and fitting piece 18D may be fixed by an adhesive, welding, or the like.

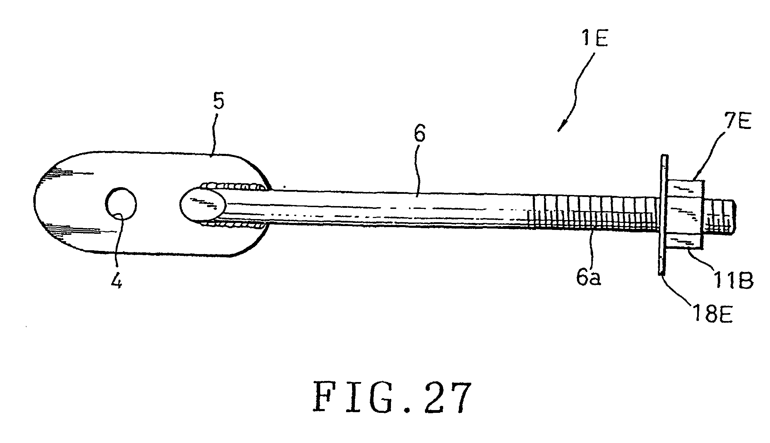

A fifth comparative connector is shown in Figs. 27 to 30. It does not form part of the invention and is distinguished from the fourth connector by the fact that the fitting piece 18D is replaced with another similar fitting piece 18E. The fitting piece 18E is formed in a T-shape in cross-section and has the threaded portion 27a on an outer circumferential portion of a lower end thereof which supports three nut segments 16, 16, 16. A connector 1E having the nut 7E with the fitting piece 18E according to the fifth comparative connector will have similar advantages to the fourth connector and its weight may be reduced.

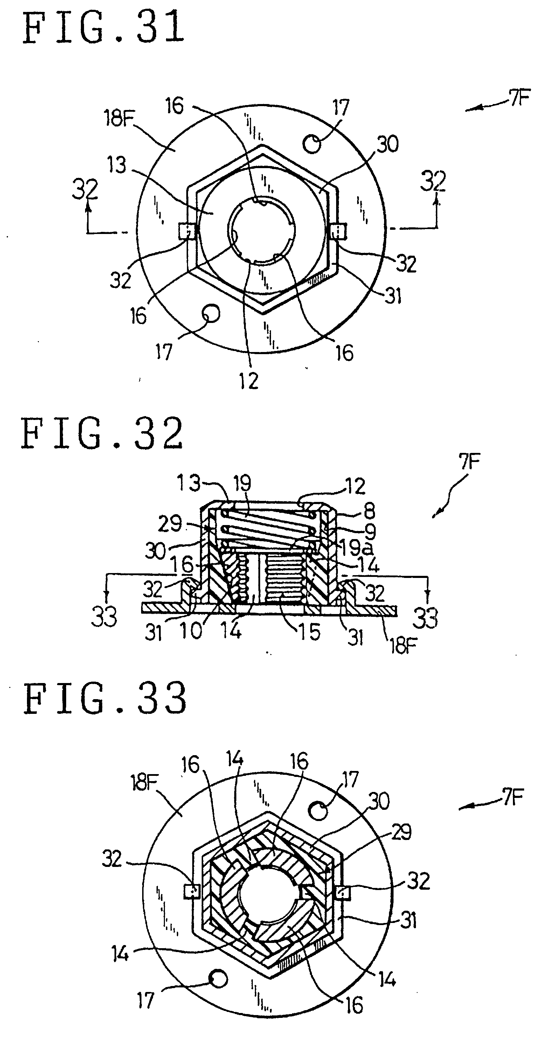

A first comparative nut is shown in Figs. 31 to 34. It does not form part of the invention and is distinguished from the nut of the first comparative connector by the fact that the fitting piece 18 is replaced with another similar fitting piece 18F. The fitting piece 18F includes an inner tubular member 29 which is made of synthetic resin. An outer tubular body 30 is formed in the shape of a hexagon and includes the bolt insertion hole 12. The outer tubular body covers an outer circumferential portion of the inner tubular member 29. Fitting pieces 32, 32 are fitted and fixed into a flange 31 provided adjacent the end portion of the outer tubular body 30. The outer wall of the inner tubular member 29 is formed in the shape of a hexagon and has three or more guideposts 14, 14, 14. This first comparative nut will have similar advantages to that of the fourth comparative connector.

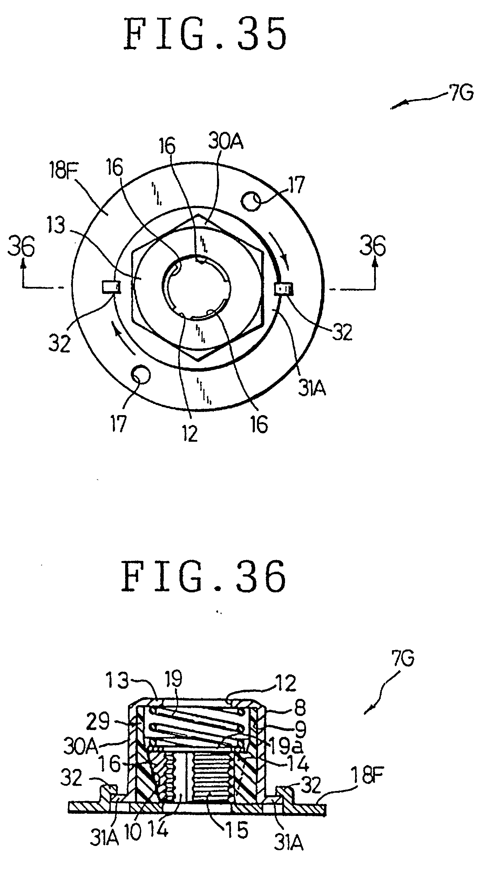

A second embodiment of the present invention is shown in Figs. 35 to 37. It is distinguished from the first comparative nut by the fact that the outer tubular body 30 is replaced with another similar tubular body 30A. The outer tubular body 30A has a flange 31A in the shape of a disc which projects outwardly at end portion thereof. In addition, the flange 31A of the outer tubular body 30A is rotatably held by fitting pieces 32, 32 of the fitting plate 18F. A nut 7G according to the second embodiment will have similar advantages to that according to the first comparative nut and the outer tubular body 30A allows rotation for screwing it onto the bolt.

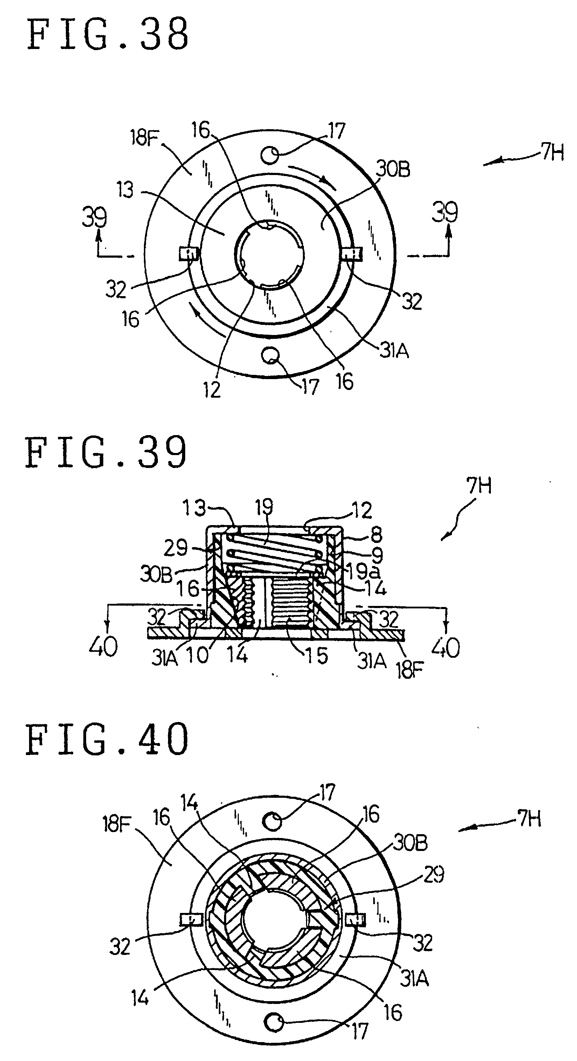

A third embodiment of the present invention is shown in Figs 38 to 41. It is distinguished from the second embodiment by the fact that the outer tubular body 30A is replaced with another similar tubular body 30B that has an outer circumferential portion of the outer tubular body 30B formed in the shape of a disc. A nut 7H with the outer tubular body 30B according to the third embodiment will have similar advantages to that according to the second embodiment.

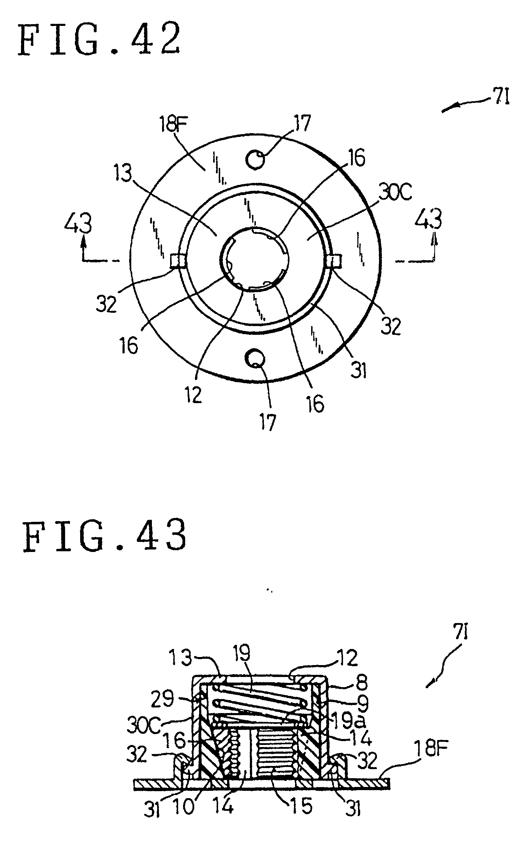

A fourth embodiment of the present invention is shown in Figs. 42 to 44. It is distinguished from the first comparative nut by the fact that the outer tubular body 30 is replaced with another similar tubular body 30C that has an outer circumferential portion of the outer tubular body 30C formed in the shape of a disc. A nut 7I with the outer tubular body 30C according to the forth embodiment will have similar advantages to that according to the first comparative nut.

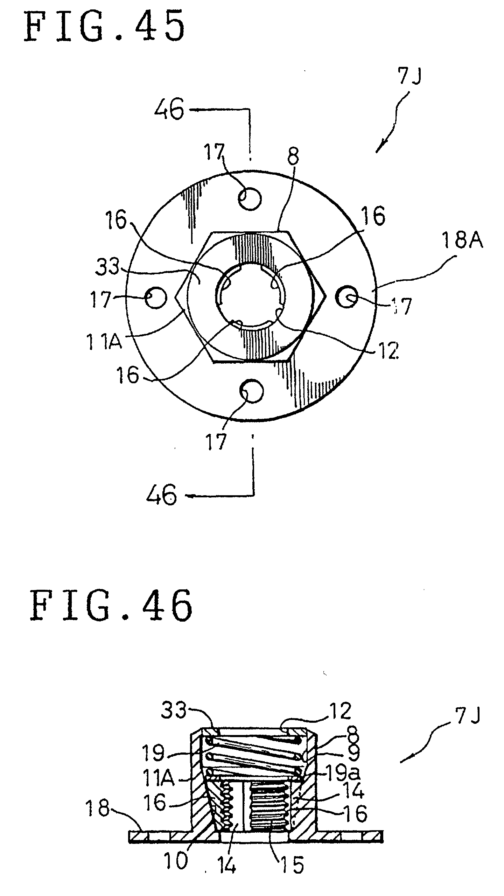

A second comparative nut is shown in Figs. 45 and 46. It is distinguished from the nut of the first comparative connector by the fact that the nut body 11A is formed integrally with a flange-shaped fitting plate 18A which is circular and comprises insertion holes 17, 17, 17 and 17. A washer 33 acts as a stopper, and supports a spring 19, which is fitted into the end portion of the bore having the largest diameter and fixed therein. The second comparative nut 7J will have similar advantages to that of the first comparative connector.

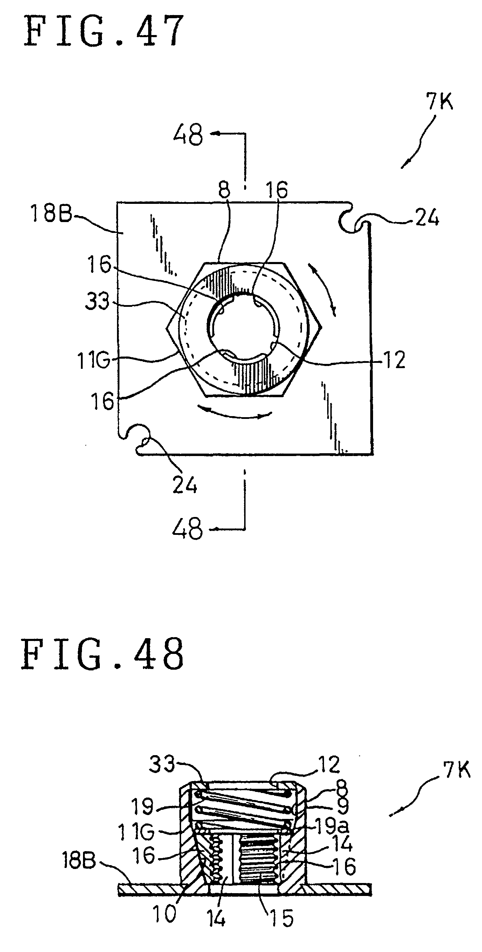

A fifth embodiment of the present invention is shown in Figs. 47 to 49. It is distinguished from the second comparative nut by the fact that a fitting plate 18B is fitted rotatably into the nut body 11B. The nut 7K according to the fifth embodiment may allow the nut body 11G to rotate, even when the fitting plate 18B is fixed to the beam or the like.

In each of the above mentioned embodiments of the present invention, the nut is described in relation to a beam connector; however, the nuts may alternatively be used on anchor bolts laid underground or other bolts.

Additionally, the nut segments may be provided in a number greater than three. Additionally, the nut may be provided without three nut segments.

The advantages of the present invention are as follows:
(1) A nut comprises a nut body formed in the shape of a polygon at an outer wall thereof, having a tapered bore; a stopper is formed at an end portion on a large bore diameter end of the nut body, and has a bolt insertion hole; at least three or more guideposts are formed coaxially at an inner wall of the nut body; at least three or more nut segments are movably entrained in a coaxial direction among the guideposts, the nut segments having a screw thread which can be screwed onto a bolt at the inner wall thereof; a fitting piece, which is formed in the shape of a flange, projects outwardly of an outer circumferential portion of the nut body and prevents dislodgement of at least three or more nut segments which are disposed at an end portion on a narrow diameter end of said nut body; and a spring disposed in the nut body such that at least three or more nut segments biased towards the narrow bore diameter end of the nut body so as to permit positioning of the nut at the tightening portion of the bolt by pushing the nut onto the bolt, and the three or more nut segments allow the nut to be screwed onto the threaded portion of the bolt.
   Therefore, it is easy to screw the nut on and labour time is reduced.
(2) As discussed in the above paragraph, the fitting piece can be fixed to the beam by screws or the like. Therefore, even if the beam contracts in use, because the nut body urges and moves itself towards the beam, and the nut segments inside the nut body slide, change in the securing efficiency of the nut is prevented.
(3) As discussed in the above paragraph, because the nut segments are biased towards the short diameter end of the bolt due to the action of the spring, the nut segments can be screwed certainly onto the bolt.

## Claims

1. A nut (7C; 7G; 7H; 7I; 7K) comprising:
a nut body (11A; 30A; 30B; 30C; 11G) provided with a polygonal outer wall (8) and a tapered bore providing opposed ends with a relatively small and a relatively large diameter;
a stopper (13) formed at an end portion of the nut body (11A; 29; 30A; 29; 30B; 29, 30C; 11G) in which the said bore has a relatively large diameter, the stopper (13) having a bolt insertion hole therein;
at least three guideposts (14, 14, 14) formed at an inner wall of the nut body (11A; 30A; 30B; 30C; 11G) parallel to the longitudinal axis of the bore;
at least three nut segments (16, 16, 16) disposed among the guideposts (14, 14, 14), the nut segments (16, 16, 16) each comprising a screw thread on a radially inner surface thereof and being adapted to move axially between the guideposts (14, 14, 14);
a fitting piece (18C; 18F; 18B), which is formed in the shape of a flange and projects radially outwardly beyond an outer circumferential portion of the nut body (11A; 30A; 30B; 30C; 11G); and
a spring (19) situated within the nut body (11A; 30A; 30B; 30C; 11G) such as to urge the nut segments (16, 16, 16) towards the said relatively small diameter end of the said bore;
**characterised in that** the said fitting piece (18C; 18F; 18B) is attached rotatably relative to at least part of the said nut body (11A; 30A; 30B; 30C; 11G).

2. A nut (7C) according to claim 1, wherein the fitting piece (18C) is attached to the nut by screwing at an end portion of the nut body (11A) proximate to the said relatively narrow diameter end of the bore.

3. A nut (7G; 7H; 7I; 7K) according to claim 1, wherein the fitting piece (18F) is formed integrally at a side portion of the nut body (30A; 30B; 30C) proximate to the said relatively narrow diameter end of the bore.

4. A nut (7C; 7G; 7H; 7I) according to claim 1, wherein the fitting piece (18C, 18F, 18B) is attached to a side portion of the nut body (11A; 30A; 30B; 30C; 11G) proximate to the said relatively narrow diameter end of the bore.

5. A nut (7C; 7G; 7H; 7I) according to any preceding claim, wherein the said fitting piece (18C; 18F) is adapted to prevent the said nut segments (16, 16, 16) from escaping from a relatively narrow diameter end of the said bore.

6. A nut (7C; 7G; 7H; 7I) according to claim 1, wherein the said fitting piece (18C; 18F) extends radially inward of a perimeter of the said bore and defines a bolt insertion aperture.

7. A nut (7) according to claim 6, wherein the fitting piece (18C) is screwed into the nut body and fixed thereinto.

8. A nut (7G; 7H; 7I) according to claim 1 comprising:
an inner tubular body (29) which is made of synthetic resin material, and defines the said tapered bore; and
an outer tubular body (30A; 30B; 30C) which has the said stopper formed therein; the said fitting piece being (18F) attached to an end portion of the inner tubular body in which the bore is of relatively small diameter and comprising a bolt insertion hole.

9. A nut (7G; 7H; 7I) according to claim 8, wherein the outer tubular body (30A; 30B; 30C) comprises an outer circumferential part fitted at the end portion proximate to the said relatively narrow diameter end of the bore, the said outer circumferential part being mounted rotatably relative to the remainder of the outer tubular body.

10. A nut (7C; 7G; 7H; 7I; 7K) according to any preceding claim in combination with a connector (1), wherein the connector (1) comprises a fitting plate (5) having an insertion hole (4) for a fixing means and a bolt (6), wherein one end portion of the bolt (6) is fixed to the fitting plate (5) and another end portion of the bolt (6) extends away from the fitting plate (5) for receiving the nut (7C; 7G; 7H; 7I; 7K) and projects outwardly.

## Patentansprüche

1. Mutter (7C; 7G; 7H; 7I; 7K), die aufweist:
einen Mutternkörper (11A; 30A, 30B; 30C; 11G), der mit einer polygonalen Außenwand (8) und einer sich verjüngenden Bohrung versehen ist, wobei gegenüberliegende Stirnseiten mit einem relativ kleinen und einem relativ großen Durchmesser vorhanden sind;
einen Anschlag (13), der an einem Stirnseitenabschnitt des Mutternkörpers (11A; 29; 30A; 29; 30B; 29, 30C; 11G) gebildet wird, in dem die Bohrung einen relativ großen Durchmesser aufweist, wobei der Anschlag (13) ein Schraubeneinsetzloch darin aufweist;
mindestens drei Führungsstreben (14, 14, 14), die an einer Innenwand des Mutternkörpers (11A; 30A; 30B; 30C; 11G) parallel zur Längsachse der Bohrung gebildet werden;
mindestens drei Mutternsegmente (16, 16, 16), die zwischen den Führungsstreben (14, 14, 14) angeordnet sind, wobei die Mutternsegmente (16, 16, 16) jeweils ein Schraubengewinde auf einer radial inneren Oberfläche davon aufweisen, und wobei sie so ausgeführt sind, daß sie sich axial zwischen den Führungsstreben (14, 14, 14) bewegen;
ein Paßteil (18C; 18F; 18B), das in der Form eines Flansches ausgebildet ist und radial nach außen über einen äußeren Umfangsabschnitt des Mutternkörpers (11A; 30A, 30B; 30C; 11G) hinaus vorsteht; und
eine Feder (19), die innerhalb des Mutternkörpers (11A; 30A; 30B; 30C; 11G) angeordnet ist, um so die Mutternsegmente (16, 16, 16) zum Ende der Bohrung mit relativ kleinem Durchmesser zu treiben;
**dadurch gekennzeichnet, daß** das Paßteil (18C; 18F; 18B) relativ zu mindestens einem Teil des Mutternkörpers (11A; 30A; 30B; 30C; 11G) drehbar befestigt ist.

2. Mutter (7C) nach Anspruch 1, bei der das Paßteil (18C) an einem Stirnseitenabschnitt des Mutternkörpers (11A) in unmittelbarer Nähe des Endes der Bohrung mit relativ kleinem Durchmesser an der Mutter durch Schrauben befestigt wird.

3. Mutter (7G; 7H; 7I; 7K) nach Anspruch 1, bei der das Paßteil (18F) zusammenhängend an einem Seitenabschnitt des Mutternkörpers (30A; 30B; 30C) in unmittelbarer Nähe des Endes der Bohrung mit relativ kleinem Durchmesser gebildet wird.

4. Mutter (7C, 7G; 7H; 7I) nach Anspruch 1, bei der das Paßteil (18C, 18F, 18B) an einem Seitenabschnitt des Mutternkörpers (11A; 30A; 30B; 30C; 11G) in unmittelbarer Nähe des Endes der Bohrung mit relativ kleinem Durchmesser befestigt ist.

5. Mutter (7C; 7G; 7H; 7I) nach vorhergehenden Ansprüchen, bei der das Paßteil (18C; 18F) so ausgeführt ist, daß verhindert wird, daß die Mutternsegmente (16, 16, 16) von einem Ende der Bohrung mit relativ kleinem Durchmesser weggehen.

6. Mutter (7C; 7G; 7H; 7I) nach Anspruch 1, bei der sich das Paßteil (18C; 18F) radial nach innen von einem Umfang der Bohrung erstreckt und eine Schraubeneinsetzöffnung definiert.

7. Mutter (7) nach Anspruch 6, bei der das Paßteil (18C) in den Mutternkörper geschraubt und darin befestigt wird.

8. Mutter (7G; 7H; 7I) nach Anspruch 1, die aufweist:
einen inneren rohrförmigen Körper (29), der aus einem synthetischen Harzmaterial besteht und die sich verjüngende Bohrung definiert; und
einen äußeren rohrförmigen Körper (30A; 30B; 30C), der den Anschlag darin ausgebildet aufweist;
wobei das Paßteil (18F) an einem Stirnseitenabschnitt des inneren rohrförmigen Körpers befestigt ist, in dem die Bohrung einen relativ kleinen Durchmesser zeigt und ein Schraubeneinsetzloch aufweist.

9. Mutter (7G; 7H; 7I) nach Anspruch 8, bei der der äußere rohrförmige Körper (30A; 30B; 30C) ein äußeres Umfangsteil aufweist, das im Stirnseitenabschnitt in unmittelbarer Nähe des Endes der Bohrung mit relativ kleinem Durchmesser eingepaßt ist, wobei das äußere Umfangsteil relativ zum übrigen äußeren rohrförmigen Körper drehbar montiert ist.

10. Mutter (7C; 7G; 7H; 7I, 7K) nach vorhergehenden Ansprüchen in Verbindung mit einem Verbindungsteil (1), worin das Verbindungsteil (1) eine Montageplatte (5) mit einem Einsetzloch (4) für eine Befestigungseinrichtung und eine Schraube (6) aufweist, worin ein Endabschnitt der Schraube (6) an der Montageplatte (5) befestigt ist, und worin sich der andere Endabschnitt der Schraube (6) von der Montageplatte (5) weg erstreckt, um die Mutter (7C; 7G; 7H; 7I; 7K) aufzunehmen, und nach außen vorsteht.

## Revendications

1. Ecrou (7C; 7G; 7H; 7I; 7K) comprenant:
un corps d'écrou (11A; 30A; 30B; 30C; 11G) comportant une paroi externe polygonale (8) et un alésage conique, établissant des extrémités opposées avec un diamètre relativement réduit et un diamètre relativement grand ;
un arrêt (13) agencé au niveau d'une partie d'extrémité du corps de l'écrou (11A; 29; 30A; 29; 30B; 29, 30C; 11G) dans laquelle ledit alésage a un diamètre relativement grand, l'arrêt (13) comportant un trou d'insertion d'un boulon ;
au moins trois tenons de guidage (14, 14, 14) agencés au niveau d'une paroi interne du corps de l'écrou (11A; 30A; 30B; 11G) parallèles à l'axe longitudinal de l'alésage ;
au moins trois segments d'écrou (16, 16, 16) agencés parmi les tenons de guidage (14, 14, 14), les segments d'écrou (16, 16, 16) comprenant chacun un filetage à vis sur une surface radialement interne correspondante et étant destinés à se déplacer axialement entre les tenons de guidage (14, 14, 14);
une pièce d'ajustement (18C ; 18F ; 18B) ayant la forme d'une bride et débordant radialement vers l'extérieur au-delà d'une partie circonférentielle externe du corps de l'écrou (11A; 30A ; 30B ; 30C ; 11G) ; et
un ressort (19) agencé dans le corps de l'écrou (11A ; 30A ; 30B ; 30C ; 11G) de sorte à pousser les segments d'écrou (16, 16, 16) vers ladite extrémité à diamètre relativement réduit dudit alésage ;
**caractérisé en ce que** ladite pièce d'ajustement (18C ; 18F ; 18B) et fixée de façon à pouvoir tourner par rapport à au moins une partie dudit corps de l'écrou (11A; 30A; 30B; 30C; 11G).

2. Ecrou (7C) selon la revendication 1, dans lequel ladite pièce d'ajustement (18C) est fixée à l'écrou par vissage au niveau d'une partie d'extrémité du corps de l'écrou (11A) proche de ladite extrémité à diamètre relativement étroit de l'alésage.

3. Ecrou (7G; 7H; 7I; 7K) selon la revendication 1, dans lequel ladite pièce d'ajustement (18F) est formée d'une seule pièce au niveau d'une partie latérale du corps de l'écrou (30A ; 30B ; 30C) proche de ladite extrémité à diamètre relativement étroit de l'alésage.

4. Ecrou (7C; 7G; 7H; 7I) selon la revendication 1, dans lequel ladite pièce d'ajustement (18C, 18F, 18B) est fixée à une partie latérale du corps de l'écrou (11A ; 30A; 30B; 30c, 11G) proche de ladite extrémité à diamètre relativement étroit de l'alésage.

5. Ecrou (7C ; 7G ; 7H ; 7I) selon l'une quelconque des revendications précédentes, dans lequel ladite pièce d'ajustement (18C, 18F) est destinée à empêcher un échappement desdits segments d'écrou (16, 16, 16) d'une extrémité à diamètre relativement étroit dudit alésage.

6. Ecrou (7C ; 7G ; 7H ; 7I) selon la revendication 1, dans lequel ladite pièce d'ajustement (18C, 18F) s'étend radialement vers l'intérieur d'un périmètre dudit alésage et définit une ouverture d'insertion d'un boulon.

7. Ecrou (7) selon la revendication 6, dans lequel ladite pièce d'ajustement (18C) est vissée dans le corps de l'écrou et fixé dans celui-ci.

8. Ecrou (7G ; 7H ; 7I) selon la revendication 1, comprenant :
un corps tubulaire interne (29) composé d'un matériau de résine synthétique et définissant ledit alésage conique ; et
un corps tubulaire externe (30A ; 30B ; 30C) comportant ledit arrêt qui y est formé;
ladite pièce d'ajustement (18F) fixée sur une partie d'extrémité du corps tubulaire interne, dans laquelle l'alésage a un diamètre relativement réduit et comprenant un trou d'insertion d'un boulon.

9. Ecrou (7G ; 7H ; 7I) selon la revendication 8, dans lequel le corps tubulaire externe de l'écrou (30A; 30B; 30C) comprend une partie circonférentielle externe ajustée au niveau de la partie d'extrémité proche de ladite extrémité à diamètre relativement étroit de l'alésage, ladite partie circonférentielle externe étant montée par rotation sur la partie restante du corps tubulaire externe.

10. Ecrou (7C; 7G ; 7H; 7I; 7K) selon l'une quelconque des revendications précédentes, combiné avec un connecteur (1), le connecteur (1) comprenant une plaque d'ajustement (5) comportant un trou d'insertion (4) pour un moyen de fixation et un boulon (6), une partie d'extrémité du boulon (6) étant fixée sur la plaque d'ajustement (5) et une autre partie d'extrémité du boulon (6) s'étendant à l'écart de la plaque d'ajustement (5) pour recevoir l'écrou (7C ; 7G ; 7H ; 7I ; 7K) et débordant vers l'extérieur.
